# EUROPÄISCHE PATENTSCHRIFT

(11) **EP 1 606 965 B1**
(45) Veröffentlichungstag und Bekanntmachung des Hinweises auf die Patenterteilung: **26.08.2009**
(21) Anmeldenummer: 05700777.5
(22) Anmeldetag: 10.01.2005
(51) Int. Cl.: H04W 16/00

(54) **VERFAHREN UND VORRICHTUNG ZUR ANPASSUNG EINES FUNKNETZMODELLS AN DIE BEDINGUNGEN EINES REALEN FUNKNETZES**
METHOD AND DEVICE FOR ADAPTING A RADIO NETWORK MODEL TO THE CONDITIONS OF A REAL RADIO NETWORK
PROCEDE ET DISPOSITIF POUR ADAPTER UN MODELE DE RESEAU RADIO AUX CONDITIONS D'UN RESEAU RADIO REEL

(30) Priorität: 15.01.2004 DE 102004002145
(43) Veröffentlichungstag der Anmeldung: 21.12.2005
(73) Patentinhaber: Actix GmbH, 01067 Dresden (DE)
(72) Erfinder: HÜBNER, Johannes, 01159 Dresden (DE); HUNOLD, Dietrich, 01129 Dresden (DE)
(74) Vertreter: Weisse, Renate
(86) Internationale Anmeldenummer: PCT/EP2005/000134
(87) Internationale Veröffentlichungsnummer: WO 2005/069666

(56) Entgegenhaltungen:
- EP-A- 1 098 546
- WO-A-02/10942
- WO-A-02/073997
- US-A1- 2002 009 992

## Beschreibung

### Technisches Gebiet

Die Erfindung betrifft ein Verfahren zur Anpassung eines Funknetzmodells an die Bedingungen eines realen Funknetzes, das ortsabhängige Modellgrößen liefert, anhand von an Meßorten gewonnenen Meßdaten der Modellgrößen aus dem realen Funknetz.

Die Erfindung betrifft weiterhin eine Vorrichtung zur Durchführung dieses Verfahrens.

### Zugrundeliegender Stand der Technik

Funknetze wie Mobilfunknetze enthalten über das Land verteilte Sendestationen. Jede Sendestation bedient eine "Funkzelle". Jeder dieser Funkzellen ist eine "Zellkennung" zugeordnet. Bestimmte für die Planung und Funktion der Funkzelle relevante Größen variieren über die Fläche der Funkzelle hinweg, beispielsweise die "Pfadverlustdaten", Diese charakterisieren die physikalisch begründete Funkausbreitungsdämpfung. Die Empfangsleistung an einem Endgerät, z.B. einem Mobiltelephon, nimmt bei vorgegebener, in eine vorgegebene Richtung abgestrahlte Sendeleistung der Sendestation mit zunehmender Entfernung von der Sendestation ab. Diese Abnahme ist einmal dadurch bedingt, daß sich die ausgesandte Sendeleistung ähnlich wie bei der Ausbreitung von Licht auf eine mit der Entfernung größer werdende Wellenfrontfläche verteilt. Die Abnahme wird aber auch durch Absorption oder durch Bebauung oder die Topographie des Geländes bestimmt.

Für die Planung und Optimierung eines Funknetzes werden Funknetzmodelle erstellt. Ein solches Funknetzmodell besteht typischerweise aus folgenden Bestandteilen:
- Standortdaten (Standorte der Stationen, Antennenhöhen und -ausrichtung usw.
- Netzparameter (Basisstationsparameter, Sektorparameter)
- typographische Daten (Höhenkarten, Clutterdaten usw.)
- Funkausbreitungsdaten (z. B. Pfadverlustmatritzen)
- Dienstekonfigurationen
- Verkehrsdaten

Dabei werden die Funkausbreitungsdaten in jeder Funkzelle üblicherweise als Matrix mit Werten, die die Funkausbreitung charakterisieren, dargestellt. Zu diesem Zweck wird das Gebiet einer Funkzelle in ein Raster von relativ kleinen Flächenstücken unterteilt. Jedem dieser Flächenstücke werden dann "Modellgrößen" zugeordnet. Das sind die für dieses Flächenstück geltenden Werte einer für die Funktion des Funknetzes relevanten Größe. Eine solche Größe sind insbesondere die Pfadverluste. Es kann auch sein, daß Sendeleistung von einer Sendestation mit unterschiedlichen Intensitäten z.B. durch Reflexionen auf verschiedenen Wegen mit unterschiedlichen Intensitäten und Laufzeiten an einem bestimmten Punkt der Funkzelle empfangen wird. Ein impulsförmiges Sendesignal würde dann als mehrere zeitversetzte Impulse unterschiedlicher Höhe empfangen werden. Man spricht daher von der "Impulsantwort". Die Werte einer solchen Modellgröße, die den einzelnen Flächenstücken zugeordnet sind, bilden jeweils eine Matrix.

In der Planungsphase, also bevor das Funknetz installiert ist, können die relevanten physikalischen Größen nicht gemessen werden. Es ist auch nach der Installation des Funknetzes nicht möglich, solche physikalischen Größen wie die Pfadverluste in jedem einzelnen Flächenstück zu messen. Die meisten Flächenstücke sind gar nicht ohne weiteres zugänglich. Außerdem wäre der Aufwand für eine solche Messung in jedem Flächenstück extrem hoch. Aus diesem Grunde sind mathematische Modelle zur Prädiktion des Funkkanals entwickelt worden, welche die verschiedenen Einflußgrößen und ihren Einfluß auf z.B. die Pfadverluste auf Grund physikalischer Gesetze oder empirisch gefundener Zusammenhänge modellieren. Diese Modelle enthalten bestimmte Parameter.

Die so erhaltenen Kanalmodelle werden in der Regel nur unvollkommen mit der Realität übereinstimmen. Es ist erforderlich, die zunächst erhaltenen Kanalmodelle anhand von Meßdaten der realen Größen an die Realität möglichst gut anzupassen. Zu diesem Zweck werden bei bekannten Verfahren die Parameter der Kanalmodelle anhand der Meßdaten variiert. Es werden die Parameter und Terme der Kanalmodelle schrittweise angepaßt und daraus wiederholt die Pfadverlustwerte neu berechnet. Dieses Verfahren ist sehr aufwendig, da nicht bekannt ist, welcher Parameter in welcher Weise für Abweichungen zwischen Meßdaten und Modellgrößen verantwortlich ist, also wie die Parameter verändert werden müssen, um die Abweichungen zwischen Modell und Realität zu minimieren.

Ein Beispiel für diesen Stand der Technik ist eine Veröffentlichung von D. J. Y Lee und W. C. Y Lee "Fine Tune Lee Model", S 406-410 IEEE Conference on Personal, Indoor ans Mobile Radio Communications", 18-21 September 2000.

Durch die WO 02/073997 A1 ist ein Verfahren zur Anpassung eines Pfadverlustmodells an die Bedingungen eines realen Funknetzes bekannt, bei welchem zunächst aus Informationen über eine Basisstation, nämlich Sendeleistung, Abstrahlmuster und Höhe, topographischen Informationen und Meßdaten, nämlich der Signalstärke, an Meßorten ein Pfadverlustmodell gewonnen wird. Dabei wird das aus physikalischen Gegebenheiten sich ergebende Modell durch die realen Meßdaten gestützt. Die Meßdaten beeinflussen, wie schon oben geschildert, die Parameter des Modells. Ein solches Pfadverlustmodell liefert für jeden Punkt eines betrachteten Sendebereichs eine Modellgröße in Form eines Pfadverlustwertes. In der Regel ergeben sich Abweichungen der so aus dem Modell gewonnenen Pfadverlustwerte von den realen Meßdaten. Solche Abweichungen sind auf Abschattungen zurückzuführen. Um diese Abschattungen zu berücksichtigen wird diese Abschattung in einem weiteren Schritt statistisch ausgewertet, woraus sich Parameter für eine Abschattungs-Vorhersage in dem betrachteten Gebiet ergibt. Es wird somit ein zweites Modell für die Abschattung verwendet, dessen Parameter aus den Abweichungen der Meßdaten von den aus dem ersten Modell erhaltenen Pfadverlustwerten bestimmt werden. Die so erhaltenen Abschattungswerte werden den aus dem ersten Modell erhaltenen Pfadverlustwerten überlagert. Wenn Meßwerte sehr zuverlässig sind, können die so aus den Modellen gewonnenen Pfadverlustwerte an den Meßorten durch die realen Meßdaten ersetzt werden. Bei geringerer Zuverlässigkeit der Meßwerte wird statt dessen ein gewichtetes Mittel von Meßdaten und Modellgrößen verwendet.

Bei dem Verfahren nach der WO 02/073997 A1 wird somit in zwei Schritten mit zwei Modellen gearbeitet, deren Parameter anhand von Meßdaten, die an bestimmten Meßorten gewonnen werden, bestimmt sind. Es handelt sich also auch hier wie bei dem vorstehend schon erwähnten Stand der Technik um die Bestimmung von Parametern von Modellen. Der Ersatz von Modellgrößen durch die realen Meßdaten erfolgt allenfalls an den Meßorten selbst.

Die US 2002/0009992 A1 beschreibt ein Verfahren, bei welchem die Signalstärke in einer Funkzelle mittels einer mobilen Empfangseinheit gemessen und mit der Sendeleistung zur Erfassung der Pfadverluste in Beziehung gesetzt wird. Die Signalstärken werden mit einer z.B. durch Satellitennavigation gewonnenen Ortsinformation kombiniert.

Die WO 02/10942 A1 betrifft einen Rechner, der ein dreidimensionales Modell der Umgebung liefert, in welcher ein Telekommunikations-Netzwerk installiert ist oder installiert werden soll. Ein tragbarer Rechner enthält Mittel zum Downloaden und Speichern wenigstens eines Teils dieses dreidimensionalen Modells und Mittel zum Darstellen der dreidimensionalen Bilddarstellung. In gleicher Weise können in diesem dreidimensionalen Modell der Umgebung Modellwerte eines Funknetzmodells und ggf. Meßwerte sichtbar gemacht werden.

### Offenbarung der Erfindung

Der Erfindung liegt die Aufgabe zu Grunde, auf einfachere Weise als beim Stand der Technik mit Hilfe von Meßdaten ein Funknetzmodell an die wirklichen Verhältnisse im Funknetz anzupassen.

Erfindungsgemäß wird diese Aufgabe bei einem Verfahren der eingangs genannten Art gelöst durch die Verfahrensschritte
(a) Festlegen eines Feingitters (10) einer Funkzelle, durch welches kleine Flächenstücke (12) gebildet werden, wobei durch das Funknetzmodell jedem Flächenstück ein Wert der Modellgröße zugeordnet ist,
(b) Festlegen eines dem Feingitter (10) überlagerten Grobgitters (20), durch welches Bereiche gebildet werden, die jeweils eine Mehrzahl von Flächenstücken (12) des Feingitters (10) umfassen,
(c) Gewinnung von Meßdaten (18) an Meßorten und
(d) Modifizieren der den Flächenstücken (12) zugeordneten Modellgrößen in den verschiedenen Bereichen (22) durch eine mathematische Operation, die unmittelbar von den in dem betreffenden Bereich gewonnenen Meßgrößen und der Position des Flächenstücks bestimmt ist.

Nach dem erfindungsgemäßen Verfahren werden also nicht die Parameter eines Kanalmodells nach Maßgabe der Messdaten verändert, womit dann - nach dem Stand der Technik - die Werte der Modellgrößen in sämtlichen Flächenstücken neu berechnet werden würden. Stattdessen werden unmittelbar die Modellgrößen ohne Betrachtung eines Kanalmodells modifiziert. Das geschieht bei den Modellgrößen aller Flächenstücke nach einer bestimmten mathematischen Operation. Diese Operation ist jeweils unmittelbar abhängig von Meßdaten und der Position des betreffenden Flächenstücks.

Die mathematische Operation kann eine Interpolation umfassen.

Diese Interpolation kann mittels der folgenden Verfahrensschritte durchgeführt werden:
- Zusammenfassen der Meßdaten in den Meßorten jeweils eines Bereiches des Grobgitters zu jeweils einem die allgemeine Größe dieser Meßdaten charakterisierenden Wert,
- Festlegen eines Referenzpunktes innerhalb des Bereiches des Grobgitters, dem der die Meßdaten charakterisierende Wert zugeordnet wird,
- Festlegen eines Einflußradius um den Referenzpunkt,
- Verändern der Modellgrößen in allen Flächenteilen innerhalb des Einflußradius nach einer abfallenden Funktion des jeweiligen Abstandes des Flächenteils von dem Referenzpunkt.

Es ist vorteilhaft, wenn der die Größe der Meßdaten charakterisierende Wert ein (arithmetischer oder geometrischer) Mittelwert der Meßdaten ist. Es kann sich auch um einen gewichteten Mittelwert handeln.

Eine bevorzugte Anwendung des erfindungsgemäßen Verfahrens besteht darin, daß die Modellgrößen modellierte Pfadverlustdaten und die Meßdaten Pfadverlustdaten sind, die aus der Empfangsleistung der von den Funkzellen des Funknetzes ausgesandten Referenzsignale bestimmt werden.

Die Modellgrößen können aber auch modellierte Impulsantworten in dem oben erläuterten Sinne sein. Diese Impulsantworten sind durch mehrere physikalische Größen gekennzeichnet, nämlich Empfangsleistungen oder Pfadverlustdaten und zugehörige Phasen- oder Laufzeitunterschiede. Diese physikalischen Größen können zu Matrizen zusammengefaßt werden.

Vorzugsweise sind als erstes folgende Verfahrensschritte vorgesehen:
- Gewinnung von Meßdaten über die gesamte Funkzelle hinweg,
- Bestimmen eines die Größen dieser Meßdaten charakterisierenden Wertes,
- Bilden eines die Größen der Modellgrößen über die gesamte Funkzelle hinweg charakterisierenden Wertes,
- Bilden der Differenz der die Größen von Meßdaten und Modelldaten charakterisierenden Werte und
- Korrigieren der Modellgrößen um diese Differenz.

Dabei sind vorteilhafterweise auch hier die die Größen von Modellgrößen und Meßdaten charakterisierenden Werte Mittelwerte.

Auf diese Weise wird zunächst ein systematischer "Versatz" zwischen den Werten der Modellgrößen und den Messdaten in der gesamten Funkzelle beseitigt. Der Mittelwert der Meßdaten über die Funkzelle hinweg fällt mit dem Mittelwert der Modellgrößen in der gesamten Funkzelle zusammen. Trotzdem können und werden in der Regel lokale Abweichungen vorliegen. Diese lokalen Abweichungen werden dann in der vorstehend beschriebenen Weise ausgeglichen.

Eine Vorrichtung zur Durchführung des beschriebenen Verfahrens mit einer Datenbank, in welcher ein virtuelles Funknetzmodell mit ortsabhängigen Modellgrößen gespeichert ist, einer Meßeinrichtung zur Erzeugung von ortsabhängigen Meßdaten des modellierten realen Funknetzes an Meßorten, ist erfindungsgemäß gekennzeichnet durch Datenverarbeitungsmittel, durch welche jede der Modellgrößen unmittelbar nach Maßgabe der Meßdaten durch eine mathematische Operation im Sinne einer Anpassung der Modellgrößen an die Meßdaten modifizierbar ist.

Dabei kann die Meßeinrichtung auf die Empfangsleistung von durch die Funkzellen ausgestrahlten Referenzsignalen ansprechen. Weiterhin kann die Meßeinrichtung zum Detektieren der Kennung der Funkzelle eingerichtet sein. Die Meßeinrichtung ist vorzugsweise mobil, z.B. auf einem Meßwagen montiert, der Straßen im Bereich der Funkzelle abfährt. Die Meßeinrichtung kann auch ein Endgerät des Funknetzes sein. Weiterhin ist es zweckmäßig, wenn die Meßeinrichtung Mittel zur Feststellung der jeweiligen aktuellen Empfangsposition enthält, beispielsweise einen Empfänger für die Satellitennavigation. Weiterhin können Mittel zum Aufzeichnen und Ausgeben der Meßdaten jeweils gemeinsam mit der Kennung der Funkzelle und der Position im Zeitpunkt der Messung vorgesehen sein.

Aufgrund eines in der beschriebenen Weise angepaßten Funknetzmodells kann dann eine Optimierung des Funknetzes z.B. durch Veränderung des Antennenwinkels der Sendestation erfolgen.

Ein Ausführungsbeispiel der Erfindung ist nachstehend unter Bezugnahme auf die zugehörigen Zeichnungen näher erläutert.

### Kurze Beschreibung der Zeichnungen

- Fig.1: ist eine schematische Darstellung zur Erläuterung des erfindungsgemäßen Verfahrens und zeigt ein Feingitter und ein Grobgitter auf einem Gebiet einer Funkzelle, wobei durch das Feingitter kleine Flächenstücke und durch das Grobgitter größere Bereiche festgelegt werden, die eine Mehrzahl von Flächenstücken des Feingitters umfassen.
- Fig.2: ist eine schematische Darstellung einer Vorrichtung zur Durchführung des erfindungsgemäßen Verfahrens.
- Fig.3: ist ein Blockdiagramm und zeigt den Gesamtablauf des erfindungsgemäßen Verfahrens.
- Fig.4: ist ein Blockdiagramm und zeigt im einzelnen die Vorverarbeitung gemäß Block 48 von Fig.3.
- Fig.5.: ist ein Blockdiagramm und zeigt im einzelnen die Gesamtversatzkorrektur gemäß Block 50 von Fig3.
- Fig.6: ist ein Blockdiagramm und zeigt im einzelnen die lokale Anpassung gemäß Block 52 von Fig.3.
- Fig.7: ist eine schematische Darstellung und veranschaulicht die Korrektur einer ursprünglich vorliegenden Pfadverlustmatrix durch reale Meßwerte.
- Fig.8: ist eine schematische Darstellung und zeigt in Form von Höhenlinien den Verlauf der von Referenzpunkten nach allen Seiten abfallenden Interpolationsfunktionen.

### Bevorzugte Ausführung der Erfindung

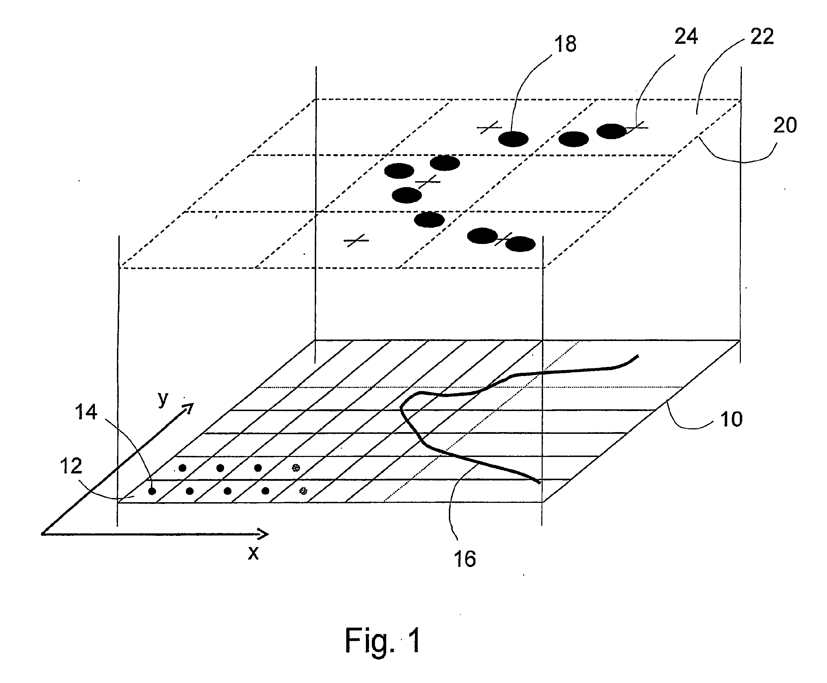

In Fig.1 ist mit 10 ein Feingitter bezeichnet, das eine Funkzelle eines Funknetzes in ein Raster von kleinen Flächenstücken 12 unterteilt. Jedem Flächenstück 12 ist ein Wert einer Modellgröße zugeordnet. Diese Modellgröße ist beispielsweise von Pfadverlustdaten gebildet. Pfadverlustdaten geben die Dämpfung der von einer Sendestation in die Richtung des betreffenden Flächenstücks abgestrahlten Sendeleistung auf dem Funkkanal bis zu dem betreffenden Flächenstück 12 an. Die dem Flächenstück 12 zugeordneten Modellgrößen sind durch Punkte 14 angedeutet. Die Modellgrößen ergeben sich aus einem Kanalmodell. Dieses Kanalmodell ist zunächst als mathematisches Modell unter Berücksichtigung der verschiedenen Einflüsse wie Entfernung, Topographie des Geländes, Bebauung und Bepflanzung etc. auch anhand von empirisch gefundenen Zusammenhängen entwickelt worden. Das Kanalmodell stimmt in der Regel noch nicht mit der Realität überein. Es wird durch Messungen an die Realität angepaßt. Dabei können die Messungen nicht in jedem einzelnen Flächenstück vorgenommen werden. In Fig.1 werden Messungen des realen Wertes der Modellgröße oder einer physikalischen Größe, aus der die Modellgröße abgeleitet wird, z.B. der Empfangsleistungen, aus der die Pfadverlustdaten gewonnen werden, längs eines Weges 16 vorgenommen. Dieser Weg kann beispielsweise eine Straße sein, längs derer ein Meßwagen fährt. Es ergeben sich ortsabhängige Meßdaten, die in Fig.1 durch Punkte 18 dargestellt sind.

Anhand dieser Meßdaten 18, die nicht alle Flächenstücke 12 erfassen, erfolgt durch Interpolation eine Korrektur unmittelbar der Modellgrößen 14. Das geschieht auf folgende Weise:

Dem Feingitter 10 wird ein Grobgitter 20 überlagert. Das Grobgitter 20 unterteilt die Funkzelle in Bereiche 22. Jeder dieser Bereiche 22 umfaßt eine größere Anzahl von kleinen Flächenstücken 12. In jedem dieser Bereiche 22 wird ein Referenzpunkt 24 festgelegt. Zweckmäßigerweise sind die Referenzpunkte 24 die Mittelpunkte der im wesentlichen rechteckigen Bereiche 22.

Zur Korrektur des Funknetzmodells wird nun folgendermaßen vorgegangen:

Zunächst erfolgt eine globale Korrektur eines Versatzes der Modellgrößen der gesamten Funkzelle. Zu diesem Zweck werden einerseits die Mittelwerte der Meßwerte und andererseits die Mittelwerte der Modellgrößen über die gesamte Funkzelle hinweg gebildet. Die Modellgrößen werden sämtlich um die Differenz dieser Mittelwerte korrigiert.

Dieser Schritt läßt aber noch lokale Abweichungen zwischen den Meßwerten und den so korrigierten Modellgrößen zu. Eine weitere lokale Anpassung der Modellgrößen erfolgt durch eine Interpolation. Zu diesem Zweck werden für jeden Bereich 22 des Grobgitters 20, in dem Meßdaten gewonnen wurden, die Mittelwerte der Meßdaten gebildet. Die Modellgröße in dem Mittelpunkt 24 eines solchen Bereiches wird auf einen von diesem Mittelwert abhängigen Wert gesetzt. Die Modellgrößen der anderen Flächenstücke 12 dieses Bereiches werden nach einer von diesem Punkt aus mit zunehmendem Abstand von dem Mittelpunkt abnehmenden Funktion korrigiert.

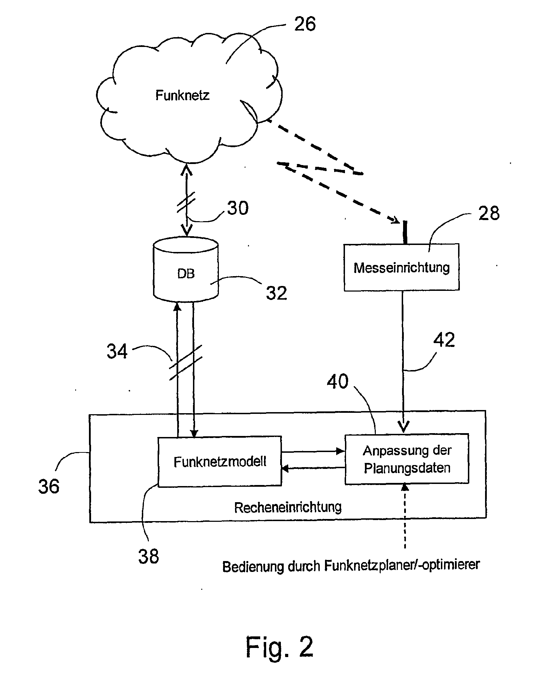

Eine Vorrichtung zur Durchführung des beschriebenen Verfahrens ist in Fig.2 dargestellt. In Fig.2 ist mit 26 das Funknetz bezeichnet, das hier schematisch dargestellt ist. Eine Meßeinrichtung 28 empfängt Meßdaten aus dem Funknetz. Die Meßeinrichtung 28 ist mobil und bewegt sich in dem vorliegenden Beispiel längs des Weges 16 von Fig.1. Die Meßeinrichtung 28 kann auf einem Meßwagen montiert sein. Es kann sich dabei auch um ein Endgerät des Funknetzes handeln. Die Meßeinrichtung enthält eine Einrichtung zur Bestimmung der momentanen Position der Meßeinrichtung. Das kann ein Satelliten-Navigationsempfänger (z.B. GPS) sein oder eine Peileinrichtung, welche die Position der Meßeinrichtung durch Anpeilen mehrerer Sendestationen ermittelt.

Das Funknetz enthält mehrere Funkzellen, die sich überlappen können. Jede Funkzelle besitzt ihre eigene Kennung. Die Meßeinrichtung spricht auf diese Kennungen an. Dadurch können die gewonnenen Meßdaten bei einer Überlappung jeweils den einzelnen Funkzellen zugeordnet werden.

Die Meßeinrichtung 28 kann die erhaltenen Meßdaten ermitteln, aufzeichnen und ausgeben.

Die Daten des Funknetzes 26 sind in einer Datenbank 32 gespeichert. Darunter sind auch die Modellgrößen des "ursprünglichen", nicht-korrigierten Funknetzmodells. In Fig.2 ist das durch eine bidirektionale Schnittstelle zwischen Datenbank 32 und Funknetz 26dargestellt. Die Datenbank 32 steht wiederum über eine bidirektionale Schnittstelle 34 mit einer Recheneinrichtung 36 in Datenaustausch.

In der Recheneinrichtung 36 ist zunächst das Funknetzmodell mit Modellgrößen in Form von Funknetzplanungsdaten in einem Speicher 38 gespeichert. Eine Recheneinheit 40 erhält Meßdaten von der Meßeinrichtung 28. Das ist durch einen Pfeil 42 angedeutet. Die Recheneinheit 40 steht in bidirektionalem Datenaustausch mit dem Speicher 38. Sie erhält somit die Modellgrößen des Funknetzmodells und die Meßdaten. Die Recheneinheit führt daraus die oben beschriebenen mathematischen Operationen, nämlich die Korrektur eines Versatzes der Modellgrößen gegenüber den Meßgrößen und die anschließende lokale Korrektur, aus. Die so korrigierten Modellgrößen werden in den Speicher zurückübertragen und über die Schnittstelle 34 in der Datenbank 32 gespeichert. Die Recheneinheit 40 wird von einer Person bedient, welche mit der Funknetzplanung und -optimierung betraut ist.

Die Datenbank erhält über die Schnittstelle 30 Informationen aus dem Funknetz 26 über Veränderungen im Funknetz oder z.B. über die Anzahl nichthergestellter Verbindungen. Diese werden bei der Optimierung des Funknetzes berücksichtigt.

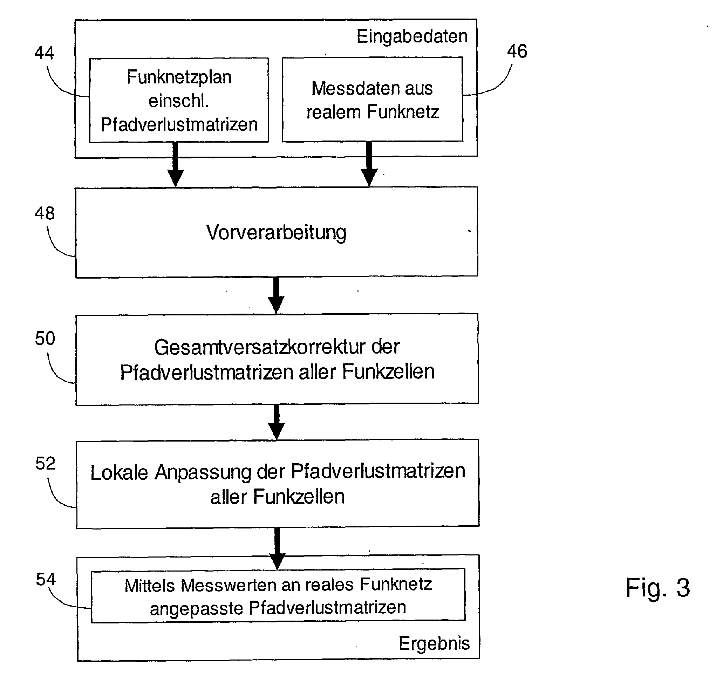

Bei einer konkreten Durchführung des erfindungsgemäßen Verfahrens gemäß Fig. 3 lagen Funknetzplanungsdaten 44 für ein etwa 53 km² großes städtisches Gebiet mit 66 Sendestationen eines UMTS-Netzes vor. Jede der Sendestationen verfügte über eine bis drei Zellen mit jeweils separater Antenne.

In den Funknetzplanungsdaten waren Terrainhöhenkarten enthalten, mit deren Hilfe für alle Funkzellen Pfadverlustmatrizen nach einem recht groben Funkausbreitungsmodell berechnet wurden. Insbesondere konnte bei diesem Ausbreitungsmodell der Einfluss der Gebäudestruktur im betrachteten Gebiet nicht beachtet werden, da dafür keine Daten vorlagen. Insofern waren also teilweise deutliche Abweichungen zwischen diesen Pfadverlustprädiktionsdaten und den in diesem Gebiet aufgezeichneten Messwerten der Pfadverluste zu erwarten. Für die Pfadverlustmatrizen wurde eine Auflösung von 25m x 25m gewählt, wodurch die kleinen Flächenstücke des im Patentanspruch 1 erwähnten Feingitters festgelegt waren.

Weiterhin waren in den Funknetzplanungsdaten auch Angaben über die Sendestationsstandorte, die an den Funkzellen eingesetzten Antennen mitsamt ihrer Ausrichtung sowie weitere Zusatzdämpfungsfaktoren enthalten. Die Antennen wurden durch eine geeignete dreidimensionale Modellierung ihrer Antennendiagramme repräsentiert. Außerdem waren die Sendeleistungen der von den einzelnen Funkzellen abgestrahlten Referenz- bzw. Pilotsignale sowie die ebenfalls abgestrahlten Zellkennungen in Form von Scrambling Codes in den Funknetzplanungsdaten gespeichert. Mit Hilfe dieser Angaben konnte aus den in den Matrizen gegebenen Pfadverlusten die flächenmäßige Verteilung der prädizierten Empfangsleistung der Pilotsignale ebenfalls in Matrixform berechnet werden. Diese Empfangsleistungsmatrizen haben die gleiche Rastereinteilung wie die zugrundeliegenden Pfadverlustmatrizen, also im Beispiel 25m x 25m.

Im durch die vorliegenden Funknetzplanungsdaten widergespiegelten realen Gebiet des UMTS-Funknetzes wurden mit einem mobilen Funkmessgerät Messungen durchgeführt. Das Messgerät war in der Lage, sowohl die Empfangsleistung des Pilotsignals zu messen als auch an Hand des entsprechenden Scrambling Codes zu detektieren, von welcher Funkzelle das jeweilige Pilotsignal abgestrahlt wurde. Weiterhin wurde zu jedem aufgezeichneten Messwert die Empfangsposition durch einen GPS-Empfänger ermittelt und ebenfalls gespeichert. Während der Messung wurden mit dem mobilen Funkmessgerät eine Reihe von Straßen abgefahren, so dass aus dem betrachteten Gebiet Messwerte 46 in ausreichender Menge als Eingabedaten nach Fig. 3 zur Verfügung standen. Zum Vergleich der Messwerte mit den Prädiktionswerten der Empfangsleistung der Pilotsignale vor der Anpassung wurden beide zunächst lokal geeignet gemittelt und anschließend an allen Messorten verglichen. Im vorliegenden Beispiel ergab sich dabei, dass zwischen ihnen eine mittlere Abweichung von über 13,5 dB bei einer Standardabweichung von über 11 dB bestand.

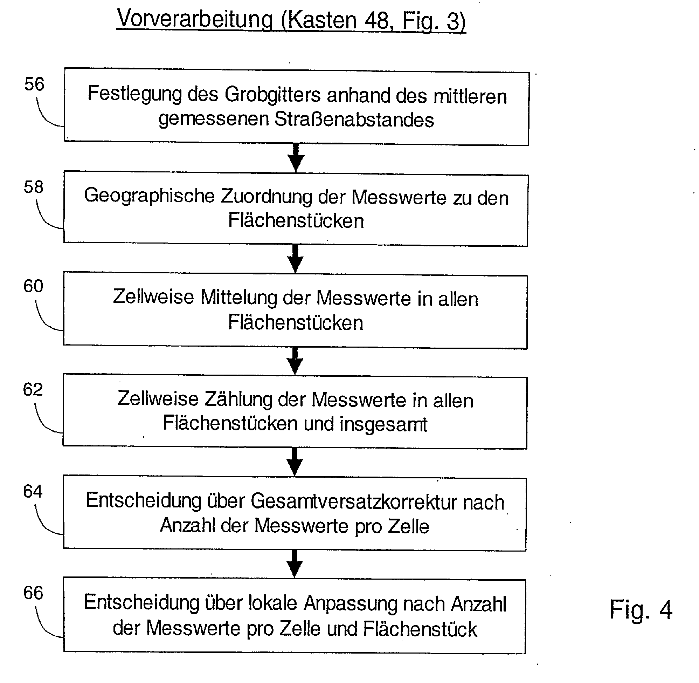

Das erfindungsgemäße Verfahren wurde auf einer Recheneinrichtung implementiert, so dass die Anpassung der Pfadverlustmatrizen mittels der Messwerte automatisiert erfolgen konnte. Zunächst wurden die Eingabedaten in einem Schritt 48 vorverarbeitet. Nach Fig. 4 wurde dabei zuerst im Schritt 56 ein Grobgitter mit einem Raster von 250m x 250m festgelegt, wobei der Abstand zweier benachbarter Flächenstücke dieses Grobgitters in etwa dem mittleren Abstand zweier Straßen entsprach, von denen Messwerte vorlagen. Mit dieser Parametrisierung wurden sodann in Schritt 58 die Messwerte geographisch den jeweiligen Flächenstücken des Grobgitters zugeordnet und in Schritt 60 zellweise gemittelt. Außerdem wurden sämtliche einer bestimmten Zelle zugeordneten Messwerte in Schritt 62 sowohl insgesamt als auch pro Flächenstück des Grobgitters gezählt. Dabei wurde die Zellzuordnung durch den jeweils gemessenen Scrambling Code der jeweiligen Zelle hergestellt. Anhand der Gesamtanzahl von Messwerten pro Zelle wurde in Schritt 64 entschieden, ob für die jeweilige Zelle eine Anpassung der Pfadverlustmatrix im Sinne der Erfindung erfolgen sollte. Lagen zu wenig Messwerte für eine Zelle vor, wurde von einer Anpassung angesehen, da die vorliegenden Messwerte nicht vertrauenswürdig genug waren. Für einige Funkzellen lagen beispielsweise keine Messdaten vor, da sie während der Messfahrt ausgeschaltet waren und nicht sendeten. Folgerichtig wurden diese Zellen automatisch von der Anpassung ausgenommen. Außerdem wurde je Funkzelle und Flächenstück des Grobgitters in Schritt 66 entschieden, ob genügend Messwerte für die spätere lokale Anpassung vorlagen. Lag die Anzahl der Messwerte in einem bestimmten Flächenstück für eine gewisse Zelle unter einer vorgegebenen Mindestanzahl, wurde das entsprechende Flächenstück für die jeweilige Zelle von der lokalen Anpassung ausgenommen.

Die eigentliche Anpassung der Pfadverlustmatrizen mittels der Messwerte erfolgte dann in zwei Schritten 50 und 52 nach Fig. 3:

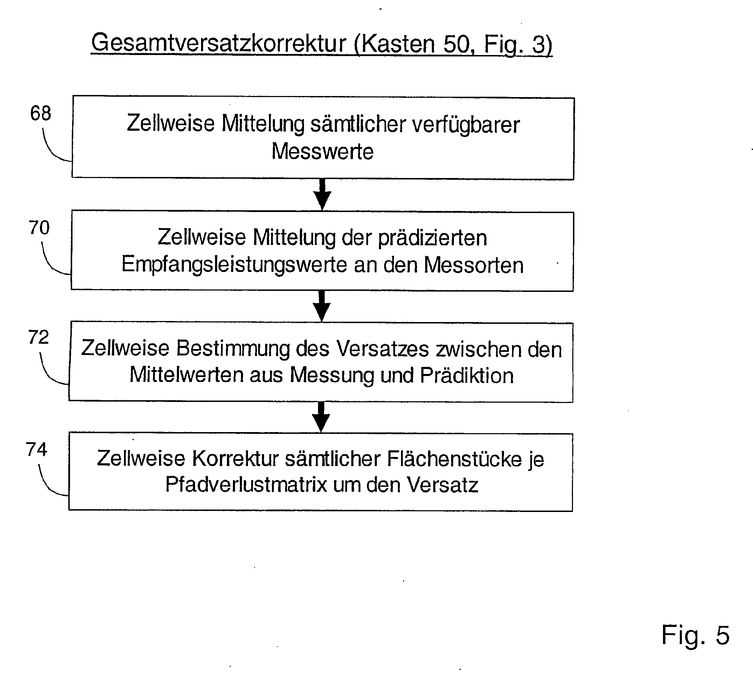

Als Erstes wurde eine Gesamtanpassung jeder Zelle, für die hinreichend viele Messwerte vorlagen, gemäß dem Ablaufschema in Fig. 5 durchgeführt. Dazu wurden zellweise sämtliche der jeweiligen Funkzelle über den Scrambling Code zugeordneten Messwerte in Schritt 68 gemittelt. Weiterhin wurden in Schritt 70 pro Zelle die prädizierten Empfangsleistungswerte des Pilotsignals an den jeweiligen Messorten gemittelt und beide Mittelwerte miteinander verglichen. Das Verhältnis (oder in der logarithmischen Einheit deziBel - die Differenz) beider Mittelwerte ergab in Schritt 72 den Gesamtversatz der prädizierten Werte gegenüber den Messwerten. Um diesen Gesamtversatz wurden in Schritt 74 die entsprechenden Matrixwerte sämtlicher Flächenstücke des Feingitters korrigiert.

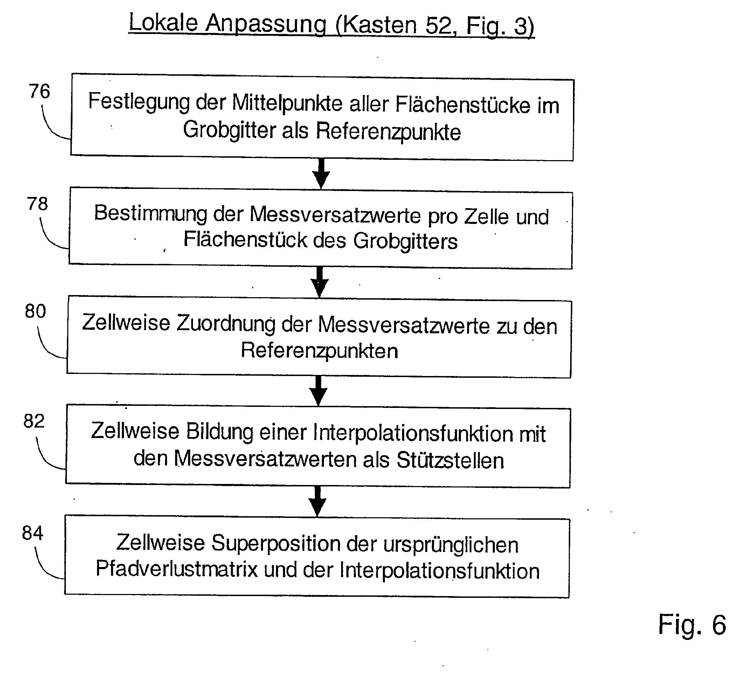

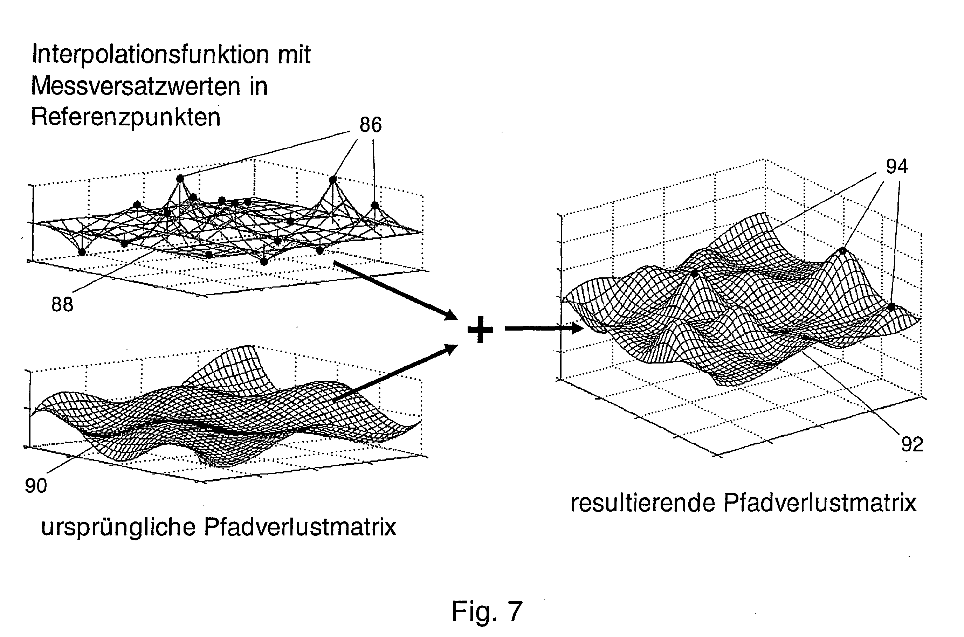

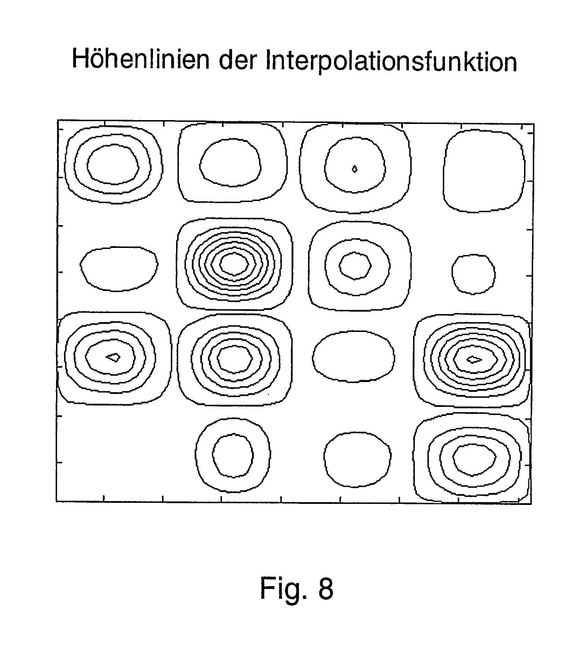

Im zweiten Schritt erfolgte dann die lokale Anpassung der Pfadverlustmatrizen gemäß dem Ablaufschema in Fig. 6. Pro Flächenstück des Grobgitters wurde in Schritt 76 der jeweilige Mittelpunkt als Referenzpunkt festgelegt. In Schritt 78 wurden dann die Abweichungen zwischen den vorher gemittelten Messwerten und den prädizierten Empfangsleistungswerten der Pilotsignale pro Funkzelle und Flächenstück des Grobgitters ermittelt. Diese Abweichungen (im Weiteren auch Messversatzwerte genannt) wurden daraufhin in Schritt 80 zellweise den entsprechenden Referenzpunkten zugeordnet. Unter Verwendung der Messversatzwerte als Stützstellen wurde in Schritt 82 eine Interpolationsfunktion gebildet, bei der die Zwischenräume zwischen den Stützstellen nach einer über den Abstand abfallenden Funktion aufgefüllt werden. Eine exemplarische Interpolationsfunktion 88 ist in Fig. 7 für eine beliebige Zelle dargestellt, wobei die Messversatzwerte in den Stützstellen durch die Punkte 86 gegeben sind. Für die Interpolationsfunktion kann ein Einflussradius um eine jede Stützstelle herum definiert werden, der den Einflussbereich der über den Abstand abfallenden Funktion angibt. Dieser Einflussradius kann z.B. der Rasterweite des Grobgitters (also hier 250m) entsprechen. Fig. 8 stellt die Höhenlinien der exemplarischen Interpolationsfunktion 88 dar. Deutlich zu erkennen sind die Ovale um die Stützstellen herum, die den mit dem Abstand zunehmenden Abfall verdeutlichen. Nach Bildung der Interpolationsfunktion wird diese in Schritt 84 auf sämtliche kleinen Flächenstücke der ursprünglichen Pfadverlustmatrix 90 der jeweiligen Zelle angewandt. Sofern beide Matrizen in logarithmischer Skale gegeben sind, handelt es sich bei dieser Operation um eine Addition. Das Ergebnis ist die rechts in Fig. 7 dargestellte angepasste Pfadverlustmatrix 92, die die Einflüsse der gemessenen Pilotsignalempfangsleistung der jeweiligen Zelle enthält. Im Vergleich zur ursprünglichen Pfadverlustmatrix 90 erkennt man deutlich die Auswirkung der Interpolationsfunktion. So lassen sich die exemplarisch herausgegriffenen drei Stützwerte 86 klar als entsprechende Erhöhungen 94 in der resultierenden Pfadverlustmatrix wieder finden.

Dieses zweistufige Verfahren konnte dank der rechentechnischen Automatisierung für alle Pfadverlustmatrizen innerhalb weniger Sekunden komplett durchgeführt werden. Nachdem die Pfadverlustmatrizen sämtlicher Funkzellen in der beschriebenen Weise an die Messwerte angepasst worden waren, wurde ein erneuter Vergleich zwischen den Messdaten und den prädizierten Empfangsleistungsmatrizen durchgeführt. Dabei wurde festgestellt, dass die mittlere Abweichung auf unter 1,4 dB bei einer Standardabweichung von unter 9 dB reduziert werden konnte.

## Patentansprüche

1. Verfahren zur Anpassung eines Funknetzmodells an die Bedingungen eines realen Funknetzes, das ortsabhängige Modellgrößen liefert, anhand von an Meßorten gewonnenen Meßdaten der Modellgrößen aus dem realen Funknetz,
**mit den Verfahrensschritten**
(a) Festlegen eines Feingitters (10) einer Funkzelle, durch welches kleine Flächenstücke (12) gebildet werden, wobei durch das Funknetzmodell jedem Flächenstück ein Wert der Modellgröße zugeordnet ist,
(b) Festlegen eines dem Feingitter (10) überlagerten Grobgitters (20), durch welches Bereiche (22) gebildet werden, die jeweils eine Mehrzahl von Flächenstücken (12) des Feingitters (10) umfassen,
(c) Gewinnung von Meßdaten (18) an Meßorten und
(d) Modifizieren der den Flächenstücken (12) zugeordneten Modellgrößen in den verschiedenen Bereichen (22) durch eine mathematische Operation, die unmittelbar von den in dem betreffenden Bereich gewonnenen Meßgrößen und der Position des Flächenstücks bestimmt ist.

2. Verfahren nach Anspruch 1, **dadurch gekennzeichnet, daß** die mathematische Operation eine Interpolation umfaßt.

3. Verfahren nach Anspruch 2, **dadurch gekennzeichnet, daß** die mathematische Funktion folgende Verfahrensschritte umfaßt:
- Zusammenfassen der Meßdaten (18) in den Meßorten jeweils eines Bereiches (22) des Grobgitters (20) zu jeweils einem die allgemeine Größe dieser Meßdaten charakterisierenden Wert,
- Festlegen eines Referenzpunktes (24) innerhalb des Bereiches (22) des Grobgitters (20), dem der die Meßdaten (18) charakterisierende Wert zugeordnet wird,
- Festlegen eines Einflußradius um den Referenzpunkt (24), und
- Verändern der Modellgrößen in allen Flächenteilen (12) innerhalb des Einflußradius nach einer abfallenden Funktion des Abstandes des jeweiligen Flächenteils von dem Referenzpunkt (24).

4. Verfahren nach Anspruch 3, **dadurch gekennzeichnet, daß** der die Größe der Meßdaten charakterisierende Wert ein Mittelwert der Meßdaten ist.

5. Verfahren nach einem der Ansprüche 1 bis 4, **dadurch gekennzeichnet, daß** die Modellgrößen modellierte Pfadverlustdaten und die Meßdaten Pfadverlustdaten sind, die aus der Empfangsleistung der von den Funkzellen des Funknetzes ausgesandten Referenzsignale bestimmt werden.

6. Verfahren nach einem der Ansprüche 1 bis 5, **dadurch gekennzeichnet, daß** die Modellgrößen modellierte Impulsantworten sind.

7. Verfahren nach einem der Ansprüche 1 bis 6, **dadurch gekennzeichnet, daß** als erstes folgende Verfahrensschritte vorgesehen sind:
- Gewinnung von Meßdaten über die gesamte Funkzelle hinweg,
- Bestimmen eines die Größen dieser Meßdaten charakterisierenden Wertes,
- Bilden eines die Größen der Modellgrößen über die gesamte Funkzelle hinweg charakterisierenden Wertes,
- Bilden der Differenz der die Größen von Meßdaten und Modelldaten charakterisierenden Werte und
- Korrigieren der Modellgrößen um diese Differenz.

8. Verfahren nach Anspruch 7, **dadurch gekennzeichnet, daß** die die Größen von Modellgrößen und Meßdaten charakterisierenden Werte Mittelwerte sind.

9. Vorrichtung zur Durchführung des Verfahrens nach einem der Ansprüche 1 bis 8, mit einer Datenbank (38), in welcher ein virtuelles Funknetzmodell mit ortsabhängigen Modellgrößen gespeichert ist, einer Meßeinrichtung (28) zur Erzeugung von ortsabhängigen Meßdaten (18) des modellierten realen Funknetzes an Meßorten, **gekennzeichnet durch** Datenverarbeitungsmittel (36), **durch** welche jede der Modellgrößen unmittelbar nach Maßgabe der Meßdaten (18) **durch** eine mathematische Operation im Sinne einer Anpassung der Modellgrößen an die Meßdaten modifizierbar ist.

10. Vorrichtung nach Anspruch 9, **dadurch gekennzeichnet, daß** die Meßeinrichtung (28) auf die Empfangsleistung von durch die Funkzellen ausgestrahlten Referenzsignalen anspricht.

11. Vorrichtung nach Anspruch 10, **dadurch gekennzeichnet, daß** die Meßeinrichtung (28) zum Detektieren der Kennung der Funkzelle eingerichtet ist.

12. Vorrichtung nach einem der Ansprüche 10 oder 11, **dadurch gekennzeichnet, daß** die Meßeinrichtung (28) mobil ist.

13. Vorrichtung nach einem der Ansprüche 10 bis 12, **dadurch gekennzeichnet, daß** die Meßeinrichtung (28) ein Endgerät des Funknetzes ist.

14. Vorrichtung nach einem der Ansprüche 10 bis 13, **dadurch gekennzeichnet, daß** die Meßeinrichtung (28) Mittel zur Feststellung der jeweiligen aktuellen Empfangsposition enthält.

15. Vorrichtung nach den Ansprüchen 11 und 14, **gekennzeichnet durch** Mittel zum Aufzeichnen und Ausgeben der Meßdaten jeweils gemeinsam mit der Kennung der Funkzelle und der Position im Zeitpunkt der Messung.

## Claims

1. A method for adapting a radio network model to the conditions of a real radio network providing position-dependent modelling values using measured data for the modelling values obtained at measuring positions from the real radio network, with the steps of
(a) setting a fine grid (10) in a radio cell defining small area portions (12), wherein a value of the modelling value is attributed to each area portion by the radio network model;
(b) setting a rough grid (20) superimposed on the fine grid (10) thereby defining areas (22) which each comprise a plurality of area portions (12) of the fine grid (10);
(c) obtaining measured data (18) at measuring positions; and
(d) modifying the modelling values attributed to the area portions (12) in the different areas (22) by a mathematical operation directly depending on the measured values obtained in the respective area and the position of the respective area portion.

2. A method according to claim 1, **characterised in that** the mathematical operation comprises an interpolation.

3. A method according to claim 2, **characterised in that** the mathematical function comprises the following steps:
- summarising the measured data (18) at the measuring positions of one respective area (22) of the rough grid (20) to one value representing the general value of the measured data;
- setting a reference point (24) within the area (22) of the rough grid (20) to which the value representing the measured data (18) is attributed;
- setting an influence radius around the reference point (24); and
- varying the modelling values in all area portions (12) within the influence radius according to a decreasing function of the distance of the respective area portion to the reference point (24).

4. A method according to claim 3, **characterised in that** the value representing the value of the measured data is an average value of the measured data.

5. A method according to any of claims 1 to 4, **characterised in that** the modelling values are modelled path loss data and the measured data are path loss data determined from the receiving power of the reference signals emitted by the radio cell of the radio network.

6. A method according to any of claims 1 to 5, **characterised in that** the modelling values are modelled impulse responses.

7. A method according to any of claims 1 to 6, **characterised in that** at first the following steps are carried out:
- obtaining measured data over the entire radio cell;
- determining a value representing the values of the measured data;
- forming a value representing the values of the modelling values over the entire radio cell;
- forming the difference of the values representing the values of measured data and modelling data; and
- correcting the modelling values with this difference.

8. A method according to claim 7, **characterised in that** the values representing the values of modelling values and measured data are average values.

9. A device for carrying out the method according to one of claims 1 to 8, comprising a data base (38) storing a virtual radio network model with position-dependent modelling values, and a measuring device (28) for generating position-dependent measured data (18) of the modelled real radio network at measuring positions, **characterised by** data processing means (36) adapted to modify each of the modelling values directly according to the measured data (18) by a mathematical operation in terms of adapting the modelling values to the measured data.

10. A device according to claim 9, **characterised in that** the measuring device (28) responds to the receiving power of reference signals emitted by the radio cells.

11. A device according to claim 10, **characterised in that** the measuring device (28) is adapted to detect the code of a radio cell.

12. A device according to any of claims 10 or 11, **characterised in that** the measuring device (28) is mobile.

13. A device according to any of claims 10 to 12, **characterised in that** the measuring device (28) is a terminal of the radio network.

14. A device according to any of claims 10 to 13, **characterised in that** the measuring device (28) comprises means for detecting the respective actual receiving position.

15. A device according to claims 11 and 14, **characterised by** means for recording and outputting the measured data together with the respective code of the radio cell and the position at the time of the measurement.

## Revendications

1. Procédé d'adaptation d'un modèle de réseau de radiotéléphonie mobile aux conditions d'un réseau de téléphonie mobile réel qui fournit des grandeurs de modèles dépendants du lieu à l'aide de données de mesure des grandeurs de modèle, obtenues sur les lieux de mesure, à partir du réseau de radiotéléphonie réel,
comprenant les étapes de procédé de
(a) Établissement d'un quadrillage fin (10) d'une cellule radio permettant de former des petites parcelles (12), une valeur de la grandeur de modèle étant associée par le modèle de réseau de radiotéléphonie à chaque parcelle,
(b) Établissement d'un quadrillage grossier (20) superposé au quadrillage fin (10) permettant de former des zones (22) qui comprennent à chaque fois plusieurs parcelles (12) du quadrillage fin (10),
(c) Obtention de données de mesure (18) à des endroits de mesure et
(d) Modification des grandeurs de modèle associées aux parcelles (12) dans les différentes zones (22) par une opération mathématique qui est déterminée directement par les grandeurs de mesure obtenues dans la zone concernée et par la position de la parcelle.

2. Procédé selon la revendication 1, **caractérisé en ce que** l'opération mathématique comprend une interpolation.

3. Procédé selon la revendication 2, **caractérisée en ce que** la fonction mathématique comprend les étapes de procédé suivantes :
- Résumé des données de mesure (18) sur les lieux de mesure de chaque zone (22) du quadrillage grossier (20) en valeur caractérisant la grandeur commune des données de mesure,
- Établissement d'un point de référence (24) à l'intérieur de la zone (22) de quadrillage (20) à laquelle est associée la valeur caractérisant les données de mesure (18),
- Établissement d'un rayon d'influence autour du point de référence (24), et
- Modification des grandeurs de modèle dans toutes les parcelles (12) situées à l'intérieur du rayon d'influence d'après une fonction décroissante de l'écart de la parcelle respective par rapport au point de référence (24).

4. Procédé selon la revendication 3, **caractérisée en ce que** la valeur caractérisant la grandeur des données de mesure est une valeur moyenne des données de mesure.

5. Procédé selon l'une quelconque des revendications 1 à 4, **caractérisé en ce que** les grandeurs de modèle sont des données de path loss mises sous forme de modèles et les données de mesure sont des données de path loss qui sont déterminées à partir de la capacité de réception des signaux de référence émis par les cellules radio du réseau de radiotéléphonie.

6. Procédé selon l'une quelconque des revendications 1 à 5, **caractérisé en ce que** les grandeurs de modèle sont des réponses impulsionnelles mises sous forme de modèles.

7. Procédé selon l'une quelconque des revendications 1 à 6, **caractérisé en ce que** les étapes de procédé suivantes sont tout d'abord prévue :
- Obtention de données de mesure sur toute la cellule radio,
- Détermination d'une valeur caractérisant les grandeurs de ces données de mesure,
- Formation d'une valeur caractérisant les tailles des grandeurs de modèle sur toute la cellule radio,
- Formation de la différence des valeurs caractérisant les tailles des grandeurs de modèle et des données de modèle et
- Correction de cette différence des grandeurs de modèle.

8. Procédé selon la revendication 7, **caractérisé en ce que** les valeurs caractérisant les tailles des grandeurs de modèles et les données de mesure sont des valeurs moyennes.

9. Dispositif pour la mise en oeuvre du procédé selon l'une quelconque des revendications 1 à 8, comprenant une banque de données (38) dans laquelle un modèle de réseau de radiotéléphonie virtuel est mémorisé avec des grandeurs de modèle dépendant du lieu, un dispositif de mesure (28) destiné à générer des données de mesure (18) du réseau de radiotéléphonie réel modelé à des endroits de mesure, **caractérisé par** des moyens de traitement de données (36) permettant de modifier chacune des grandeurs de modèle directement en fonction des données de mesure (18) par une opération mathématique en vue d'une adaptation des grandeurs de modèles aux données de mesure.

10. Dispositif selon la revendication 9, **caractérisé en ce que** le dispositif de mesure (28) répond à la puissance de réception de signaux de référence émis par les cellules radio.

11. Dispositif selon la revendication 10, **caractérisé en ce que** le dispositif de mesure (28) est aménagé de façon à détecter la reconnaissance de la cellule radio.

12. Dispositif selon l'une quelconque des revendications 10 ou 11, **caractérisé en ce que** le dispositif de mesure (28) est mobile.

13. Dispositif selon l'une quelconque des revendications 10 à 12, **caractérisé en ce que** le dispositif de mesure(28) est un terminal du réseau de radiotéléphonie.

14. Dispositif selon l'une quelconque des revendications 10 à 13, **caractérisé en ce que** le dispositif de mesure (28) comprend des moyens de mise en évidence de chaque position de réception actuelle.

15. Dispositif selon les revendications 11 et 14,
**caractérisé par** des moyens d'enregistrement et d'émission de données de mesure accompagnés à chaque fois par la détection de la cellule radio et de la position au moment de la mesure.
